# EUROPEAN PATENT SPECIFICATION

(11) **EP 2 858 056 B1**
(45) Date of publication and mention of the grant of the patent: **07.12.2016**
(21) Application number: 13187587.4
(22) Date of filing: 07.10.2013
(51) Int. Cl.: G08G 1/017, G08G 1/04, G08G 1/056

(54) **Traffic surveillance system**
Verkehrsüberwachungssystem
Système de surveillance de trafic

(43) Date of publication of application: 08.04.2015
(73) Proprietor: Kapsch TrafficCom AB, 551 10 Jönköping (SE)
(72) Inventor: Crona, Björn, 553 33 Jönköping (SE)
(74) Representative: Zacco Sweden AB

(56) References cited:
- WO-A1-2011/102261
- GB-A- 2 442 503
- US-A1- 2005 231 384

## Description

### TECHNICAL FIELD

The present invention relates to a traffic surveillance system. The system is adapted to track and register vehicles passing a surveillance zone, the traffic surveillance system comprises a carrying structure and a plurality of traffic surveillance devices, wherein the traffic surveillance devices are adapted to be mounted upon said carrying structure and comprises at least a vehicle identity registration device and a vehicle tracking device. The surveillance zone comprises a plurality of gateway zones and at least one interconnecting zone connecting at least two gateway zones with each other.

### BACKGROUND ART

Traffic surveillance systems are used to detect, monitor/track and register vehicles passing in a surveillance zone. The most commonly used traffic surveillance system comprises a gantry positioned across the road to be monitored with several devices arranged onto the gantry such that vehicles passing of the surveillance zone as well as the entry into and exit out of the surveillance zone may be monitored.

Requirements on a traffic surveillance system include tracking vehicles throughout the entire surveillance zone with a video camera or several cameras. The traffic surveillance system is often used in combination with road tolling. Cameras capturing the front and back licence plates of vehicles to be identified (so called ANPR cameras), or transceivers communicating with transponders arranged in vehicles, are also often included in the traffic surveillance system. Lightning means (visible or invisible to human eye) providing light to the surveillance zone and the vehicles to be captured is also commonly included. The devices mentioned, and other devices provided in the traffic surveillance system, are all arranged upon the gantry and are in doing so also arranged at essentially the same height above the road, thereby restricting the range of possible working angels towards the surveillance zone. The height of the gantry across the road is such that all kinds of vehicles are able to pass under the gantry. The working angles of the devices enforced by the gantry are hence not always the most favourable for the various devices and applications of the traffic surveillance system.

Gantries may be large and obstructive in order to accommodate the devices needed to perform the surveillance and registration as well as to allow maintenance to be performed by climbing the gantry. The visual impact of a large gantry is often perceived as negative by by-passers or nearby residences.

An alternative to large gantries is to provide smaller gantries of less visual impact, but in order to install or perform maintenance on the devices arranged upon such gantries equipment such as lifting cranes are required to reach the devices situated high up across the road, and the road needs to be temporarily closed off to vehicle traffic passing under the gantry such that safe and efficient maintenance can take place. Hence, such traffic surveillance systems are quite burdensome to maintain.

If several roads are monitored and/or tolled several gantries with devices arranged upon them are needed; often one gantry per road in order to ensure accurate surveillance. Consequently the visual impact and implementation cost is large. WO 2011/102261 A1 discloses one example of a toll collection system.

There is hence a need for an improved traffic surveillance system removing the above mentioned disadvantages.

### SUMMARY OF THE INVENTION

The object of the present invention is to provide an improved traffic surveillance system adapted to track and register vehicles passing a surveillance zone in a reliable manner while still allowing installation and/or maintenance to be made in a manner that is simple and safe; the traffic surveillance system having low or no impact on the traffic flow and low visual
impact. The object of the invention is achieved by system set out in the independent claim. The traffic surveillance system of the invention is adapted to track and register vehicles passing a surveillance zone, the traffic surveillance system comprises a carrying structure and a plurality of traffic surveillance devices, wherein the traffic surveillance devices are adapted to be mounted upon the carrying structure and comprises at least a vehicle identity registration device and a vehicle tracking device, the surveillance zone being defined as the coverage of said traffic surveillance devices in a plane from which the carrying structure protrudes, wherein the surveillance zone comprises a plurality of gateway zones and at least one interconnecting zone, which interconnecting zone connects at least two gateway zones with each other.

In the inventive traffic surveillance system the vehicle identity registration device is arranged such upon the carrying structure, that it is adapted to record a passage of a vehicle into or out from the surveillance zone through the gateway zones, and thereby define the gateway zones and the vehicle tracking device is arranged such upon the carrying structure that it defines an essentially arc shaped interconnecting zone.

The arc shape is defined as bend shape either continuously bend or discrete bend in steps. The bend of the arc shaped interconnecting zone can be arranged such, that it is curved either about the carrying structure or away from it. The carrying structure can thereby be arranged adjacent to the surveillance zone instead of above as previously known.

The surveillance zone is defined as the area upon said surveillance plane, which the surveillance devices covers, i.e. capture area of the traffic surveillance devices. In an implementation of the surveillance system the surveillance area is adapted to correspond to the traffic area in which monitoring and/or registering of vehicles is desired. The gateway zones are part of the surveillance zone where the vehicles enter or exit the surveillance zone, i.e. are entrance/exit zones. The surveillance zone comprises at least two gateway zones such that a vehicle normally enters and exits the surveillance zone through different gateway zones. The gateway zones are connected by the interconnecting zone. By providing the interconnecting zone with an arc shape, it is provided for arranging the traffic surveillance system beside a curve of a road, especially fortunate is in the middle of a traffic round about. The area of the interconnecting zone, defined by the vehicle tracking device, corresponds to the area of a road which the traffic surveillance system is intended to monitor when the system is installed. It is understood that in an implementation of the suggested system the surveillance plane is arranged parallel with a plane of a road that is to be monitored. The interconnecting zones overlap with each other or are at least arranged boundary to boundary to each other such that a vehicle passing several interconnecting zones, over the boundaries, may be continuously tracked by the vehicle tracking device.

The carrying structure may comprise one or several individual structures arranged to make up the carrying structure adapted to carry the traffic surveillance devices. One single structure is preferred in order to reduce cost and visual impact. Due to the inventive arc shaped interconnecting zones it is possible to place and surveillance system covering a plurality of roads, with just one surveillance system.

The vehicle identity registration device may comprise a plurality of vehicle identity registration cameras arranged to capture images of vehicles passing into or out of the surveillance zone through the gateway zones, the traffic surveillance system being provided with image processing means adapted to identify vehicles in images captured by said vehicle identity registration camera. Examples of a suitable vehicle identity registration device are an ANPR (automatic number plate recognition) camera or a camera recognising other distinct features of a vehicle, e.g. "fingerprinting".

In one aspect of the invention the vehicle identity registration camera is arranged below an average height of vehicles for which the traffic surveillance zone is adapted for. A small working angle is thereby achieved; the working angle being defined as the angle between the camera direction and the surveillance plane. A small working angle of the vehicle identity registration camera results in pictures captured essentially capturing only the front or rear of the vehicles. Such a vehicle identity registration camera position is beneficial because it facilitates a favourable identification of the registration number of the licence plate and minimizes the risk of unidentifiable licence plates in the captured pictures, due to lesser images processing.

The height at which the vehicle identity registration camera is arranged may however be higher or lower than the average height of vehicles for which the traffic surveillance zone is adapted for. One benefit of the inventive traffic surveillance system is that the height, i.e. the vertical positioning upon the carrying structure, of the vehicle identity registration camera as well as the vehicle tracking device is not predetermined and may be adapted to the present use of the traffic surveillance system, thereby making the system flexible and versatile. The vehicle identity registration camera may be adjustably arranged upon the carrying structure such that the vertical position and thus also the working angle may be changed.

The vehicle identity registration cameras may be arranged such that they can capture images of a front or a rear of a vehicle entering or exiting said surveillance zone through said gateway zones with a camera direction essentially parallel with the surveillance plane. This corresponds to a working angle between the camera direction and the surveillance plane of zero degrees. If the vehicle identity registration camera is arranged parallel with the surveillance plane, a vehicle passing into our out from the surveillance zone through the gateway zones is captured by the camera essentially straight from ahead or essentially straight from the back, whereby the number plate and/or distinctive feature is clearly visible in the picture. Thereby, all vehicles entering or exiting the surveillance zone may be registered by identification of their licence plates or distinctive features. Other working angles may also be used. The working angle may be set depending on the type of traffic and the surveillance zone to be monitored. In some aspects of the invention the identity registration camera(s) may be arranged to capture the vehicle passing into our out from the surveillance zone from an angle.

The vehicle tracking device may comprise at least one vehicle tracking camera, wherein the vehicle tracking camera is arranged at a position such that it can capture images of the surveillance zone from above and thereby define the arc shaped interconnecting zone. Capturing images of the surveillance zone from above essentially means that vehicles passing the surveillance zone are captured at an angle, wherein the angle is formed between the surveillance plane and the camera capturing direction. The vehicle tracking device may thus monitor a vehicle throughout the surveillance zone as it passes the interconnecting zones after entering via a gateway zone and exiting via the same or another gateway zone.

Part of the area captured by a vehicle tracking device may be masked such that the vehicle tracking device defines essentially arc shaped interconnecting zones; wherein the arc shaped interconnecting zones correspond to the area of a road to be monitored within the surveillance zone. The area of interest in the captured image may thus be reproduced in high resolution whereas unwanted noise in the image may be removed by masking. Identification and tracking of vehicles in the images are thus simplified.

The vehicle tracking camera may be a video camera, a camera taking pictures continuously or any other camera suitable for capturing an area of the surveillance zone and thereby defining the arc shaped interconnecting zones. The tracking camera can also be of a stereo camera type.

The traffic surveillance system may be provided with a plurality of vehicle tracking cameras. The vehicle tracking cameras are adapted to have a total capturing area comprising the whole surveillance zone. The plurality of vehicle tracking cameras may be positioned in different directions and their total capturing area include the gateway zones of the surveillance zone. The vehicle tracking cameras are arranged to define arc shaped interconnecting zones which are arranged boundary to boundary or overlapping each other. The images captured by the plurality of vehicle tracking cameras may be processed to provide a combined image of the entire surveillance zone.

The plurality of vehicle tracking cameras defines a plurality of interconnecting zones, which interconnecting zones together may form a circular area with an inner and outer boundary such that the carrying structure is provided inside the inner boundary; the circular area being arranged in the plane of the surveillance. The interconnecting zones together form part of a circular area, i.e. an arc or curve shaped area. Providing the carrying structure inside the inner boundary, which does not belong to the surveillance zone, allows access to the devices arranged upon the carrying structure from without disturbing the traffic flow of the monitored road. Hence, access for e.g. maintenance and upgrade of the inventive traffic surveillance system may be performed without impacting the traffic flow.

The interconnecting zones preferably correspond to the area of the road to be monitored, wherein the road to be monitored is arc shaped. By providing the carrying structure inside the inner boundary of the round area the carrying structure is accessible from an area different from the interconnecting zones. Thereby, the devices arranged upon the carrying structure can be reached without obstructing the interconnecting zones, i.e. hindering traffic passing the surveillance zone.

In one aspect of the invention the surveillance zone is adapted to cover a traffic roundabout and the gateway zones are adapted to cover entrances of the traffic roundabout and the interconnecting zones are adapted to cover road areas of the entrances and the area in-between the entrances. The plane of the surveillance zone is arranged at the plane of the traffic roundabout, the carrying structure protruding from the plane of the surveillance zone. Normally, the traffic roundabout entrances (junctions) function as both and entrances and exits of the roundabout, arranged to allow traffic to pass in both directions. The traffic surveillance devices are arranged to register as well as track vehicles in the gateway zones and in the interconnecting zones respectively independent of the direction of travel. Each vehicle entering the roundabout via an entrance can thereby be tracked throughout the roundabout by the vehicle tracking device and registered upon entry and exit by the vehicle identity registration device(s). The carrying structure is preferably provided inside the inner boundary of the area defined by the interconnecting zones; i.e. in the middle of the roundabout. By providing such a design several roads may be placed under surveillance by the same vehicle surveillance system. The need for several individual surveillance systems arranged at several individual roads are eliminated when monitoring the roads as they meet in the roundabout, and surveillance, especially tolling of all the roads entering the traffic roundabout may be performed by the single traffic surveillance system according to the invention. Hence a traffic surveillance system according to the invention is cost effective and has a high surveillance capacity. Because of the inventive systems structure to be provided with a surveillance zone at least partially surrounding the mounting structure, the system can be arranged e.g. in a traffic roundabout in order to monitor a plurality of roads connecting to the traffic roundabout. The inventive system is especially adapted to be used as a tolling facility.

The traffic surveillance system may further be provided with lightning means in order to illuminate the surveillance zone. The lightning means is provided upon the structure distanced to the vehicle identity registration device and vehicle tracking device such, that obstructions falling from the sky, especially rain and/or snow are not illuminated immediately in front of the vehicle identity registration device and vehicle tracking device. Providing the lightning means and the cameras at different heights is possible because of the arrangement upon the carrying structure, the carrying structure protruding essentially perpendicular from the plane of the surveillance. The lightning means may be a directed street light, spotlight or other suitable light source, visible or invisible (to human eye) light source.

Preferably, the lightning means are provided such as to illuminate the surveillance zone from an angle and preferably above the identify registration device. The vertical positioning upon the carrying structure, and hence the angle towards the surveillance zone, is preferably chosen such that by-passers, e.g. drivers, are not blinded by the light.

The lightning means is preferably be arranged upon the same structure as the vehicle identity registration device and vehicle tracking device or may also be provided at another individual structure than the individual structure upon which the vehicle identity registration device and vehicle tracking device are provided, the individual structures being part of the carrying structure.

The traffic surveillance system may further be provided with a radio transceiver for communication with transponder adapted to be arranged within a vehicle. This is particularly useful when the traffic surveillance system is used for road tolling. A transceiver is adapted to communicate with the transponder and can thereby identify (register) and track a vehicle provided with the transponder. The transceiver can thereby act both as a registration and tracking device. A system can be provided with a transceiver as an additional registering and/or tracking device to the registration and tracking cameras or even be replacing them.

The vehicle tracking device and the vehicle identity registration device may be provided at significantly different heights upon the carrying structure, wherein each of the vehicle tracking device and the vehicle identity registration device is adapted to be provided at a height optimising respective systems working angle towards its operation/capturing area. Especially when a vehicle registration camera is used, images from the front and rear of vehicles are preferred. Because the inventive system allows the placement of the structure holding the traffic surveillance devices beside (or inside) the surveillance zone, the surveillance devices can be arranged at the height most suitable for them without affecting the traffic flow.

The height of the devices is defined as their vertical position upon the carrying structure in relation to the plane of the surveillance zone from which the carrying structure protrudes.

### BRIEF DESCRIPTION OF THE DRAWINGS

The present invention will now be described in detail with reference to the figures, wherein:
Figure 1a, b shows a schematic drawing of one embodiment of the present invention;
Figure 2a, b shows a schematic view of two embodiments of the present invention;
Figure 3a, b shows a schematic views of another embodiment of the present invention

### DETAILED DESCRIPTION

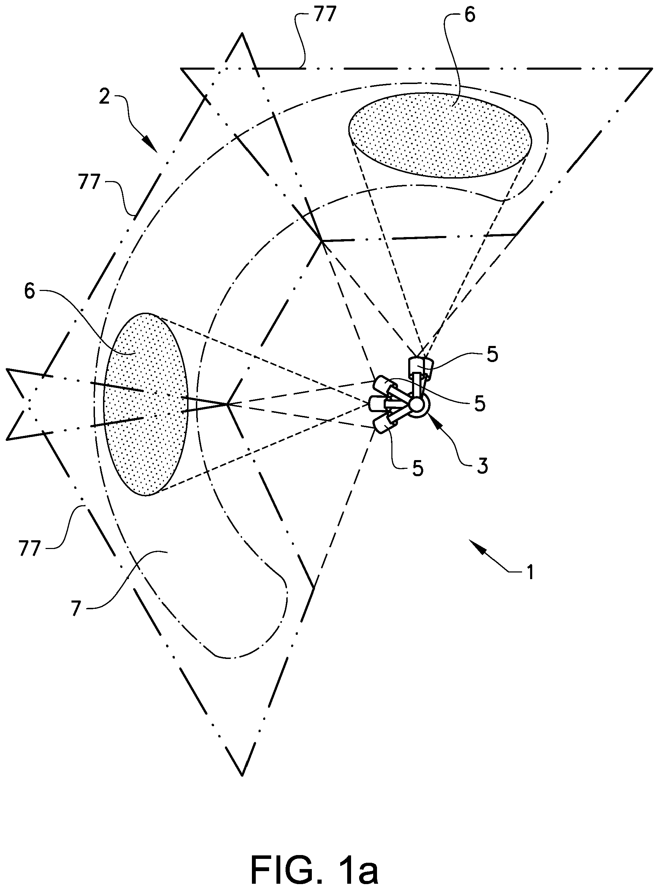

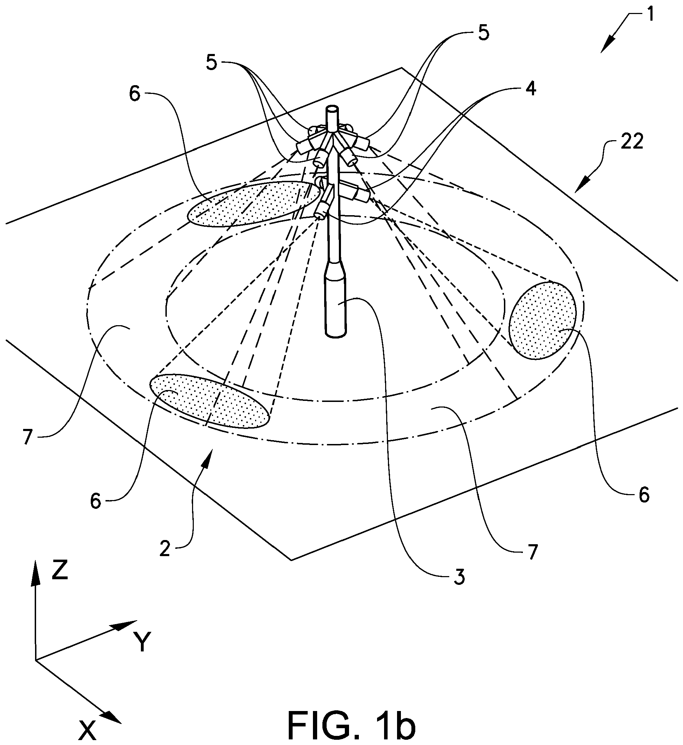

The inventive traffic surveillance system 1 adapted to track and register vehicles passing through a surveillance zone 2 will now be described in conjunction with Figures 1-5.

In the following, embodiments of the present invention are described. The invention is however not limited thereto. All the figures are schematic.

In figure la the basic principle of the inventive traffic surveillance system 1 is disclosed. In figure 1b an embodiment of the inventive traffic surveillance system 1 is disclosed. The traffic surveillance system 1 comprises a carrying structure 3 upon which traffic surveillance devices 4, 5 are arranged. The traffic surveillance devices 4, 5 comprise at least a vehicle identity registration device 4 and a vehicle tracking device 5. The surveillance zone 2 is defined as an area covered by the traffic surveillance devices 4, 5 upon a plane 22; the coverage being the total area of the respective capturing area 6, 7 of each traffic surveillance device 4, 5 in the traffic surveillance system 1, see Figure 1a, b. The vehicle tracking devices 5 defines essentially arc shaped interconnecting zone 7, which is build up by the capturing areas 77 of the vehicle tracking devices 5. The interconnecting zone 7 connects the gateways zones 6, which is defined by the capturing area of the vehicle identity registration device 4.

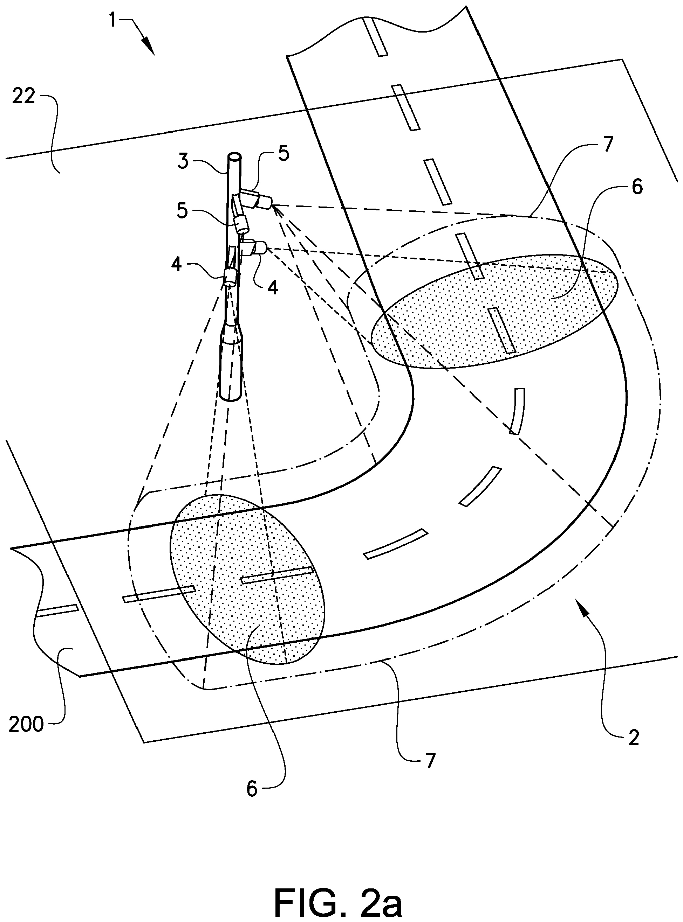

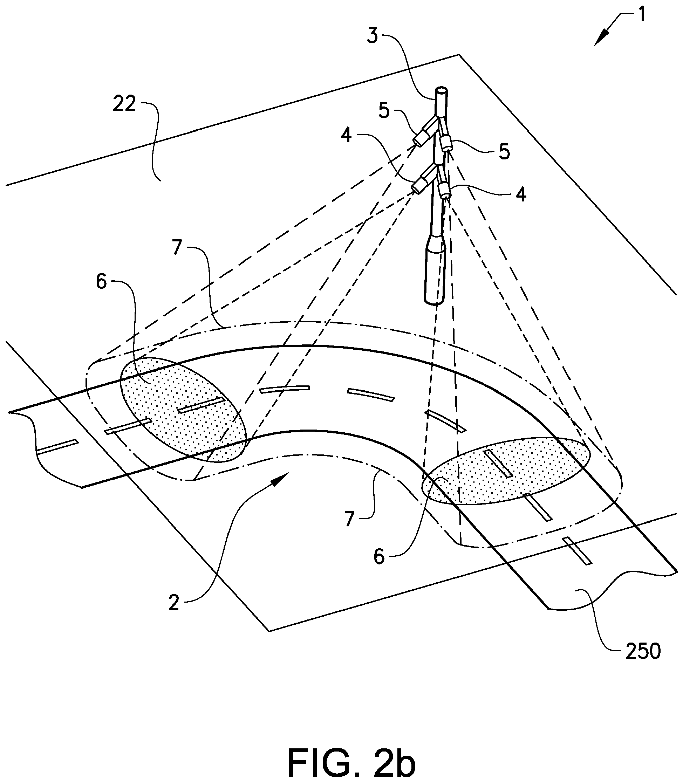

The surveillance zone 2 is provided in a plane 22 from which the carrying structure 3 protrudes, see Figure 1a. Upon arranging the carrying structure 3 in a traffic zone, see Figures 2-5, the surveillance zone 2 is subsequently arranged in ground level corresponding to the plane of a road being put under surveillance by the traffic surveillance system 1. The interconnecting zone 7 is adapted to cover the road areas of the traffic zone. The carrying structure 3 extends in a mainly perpendicular direction of the plane 22 upon which the surveillance zone 2 is defined.

The vehicle registration devices 4 are arranged to define gateway zones 6; the gateway zones 6 being areas of the surveillance zone 2 at which vehicles pass when entering or exiting the surveillance zone 2. Thus, the number of gateway zones 6 to be defined depends on the traffic zone.

In Figure 2a, the traffic surveillance devices 4, 5 comprise two vehicle identity registration devices 4 and a vehicle tracking device 5 arranged to register and track vehicles passing a curve of a road. The two vehicle identity registration devices 4, registration cameras, are each arranged and directed to capture an area of the surveillance zone 2 at which a vehicle either enters or exits the surveillance zone 2; thereby defining two gateway zones 6. The registration cameras are arranged at suitable heights upon the carrying structure 3 such that they capture images of a front or a rear of a vehicle entering or exiting the surveillance zone 2 via the gateway zones 6.

The vehicle tracking device 5, is arranged upon the carrying structure 3 such that it captures the surveillance zone 2 of interest thereby also defining the arc shaped interconnecting zone 7 arranged intermediate the gateway zones 6. The vehicles thereby enters the surveillance zone 2 through one gateway zone 6 and exiting through the other gateway zone 6 and is tracked while passing through the whole surveillance zone 2.

Due to the configuration of the capturing area of the tracking devices 5, such that it defines an arc shaped interconnecting zone 7, the traffic surveillance system 1 can be beside a road 200 in a curve. The arrangement beside the road 200 gives several advantages, such as maintenance of the traffic surveillance system 1 can be done without interrupting the traffic upon the road 200.

The carrying structure 3 in Figure 2a is positioned in the radial centre of a curve of a road 200. The carrying structure 3, a support of mainly vertical extension, allows the traffic surveillance devices 4, 5 to be arranged at various heights upon the carrying structure 3. The vehicle tracking device 5 is arranged above the vehicle identity registration devices 4 such that both devices can be arranged with their optimal working angel. A vehicle tracking device 5 provided as a camera is arranged at a height above the plane 22, such that it becomes a view from above in order to define the interconnecting zones 7. A vehicle identification device 4 provided as a vehicle identification camera 4 is preferably provided at a height such that it can capture images from the front and the rear of vehicles passing into/out of the gateway zones 6. This is allowed due to the arrangement beside the road 200.

The set up of the traffic surveillance system 1 is the same in Figure 2b as in Figure 2a, but the carrying structure 3 is positioned outside the curve of the road 250, thereby facing the outer perimeter of the arc shaped interconnecting zone 7.

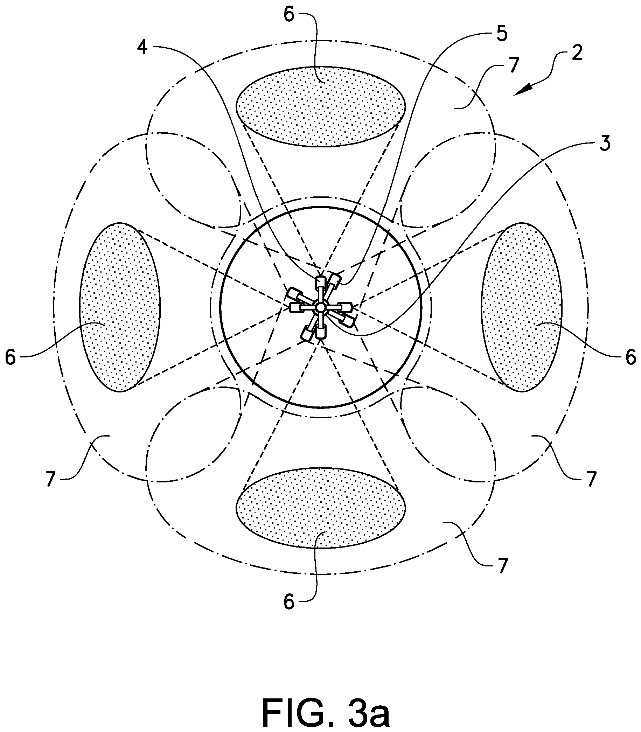

In figure 3a another example of the inventive traffic surveillance system 1 is disclosed. The traffic surveillance system 1 comprises a plurality of vehicle identity registration cameras 4, which are arranged such that gateway zones 6 are defined, whereby the gateway zones 6 being the capturing area of the vehicle identity registration cameras 4. The gateway zones 6 are comprised within the interconnecting zone 7 which is defined by the capturing area of the vehicle tracking cameras 5. The vehicle tracking cameras 5 capturing areas 77 define the surveillance zone 2 and the interconnecting zone 7 such that it is defines an essentially circular interconnecting zone provided with an inner and outer boundary. The carrying structure 3 is positioned inside the inner boundary of the round area formed by the interconnecting zone 7. In Figure 3a the surveillance zone 2 comprises four gateway zones 6 defined by four vehicle identity registration cameras 4 and one interconnecting zone defined by four vehicle tracking cameras 5. The capturing areas 77, defined by the vehicle tracking cameras 5, are achieved by the arrangement and direction of the tracking cameras 5 such that the interconnecting zone 7 and thereby the surveillance zone 2 becomes the desired circular shape. Hence, the vehicle tracking device 5 may have fewer or more tracking cameras than exemplified above, resulting in fewer or more capturing areas 77. The capturing areas 77 may be masked in order to not capture parts of the surrounding, which are outside the desired surveillance area.

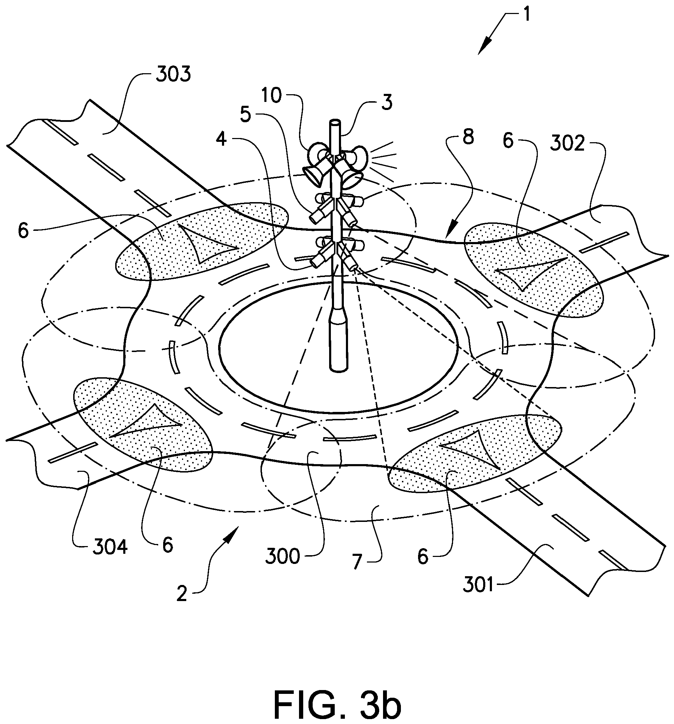

The inventive traffic surveillance system 1 disclosed above is beneficially implemented for traffic surveillance in a traffic roundabout 8, as can be seen in figure 3 b. Especially beneficial is the use of the inventive system 1 as a tolling system in a traffic roundabout 8. The carrying structure 3 is positioned in the centre of the roundabout 8, whereby the carrying structure 3 and the surveillance devices 4, 5 thereon are accessible for maintenance without disturbing the traffic flow through the roundabout 8. The vehicle identity registration devices 4, arranged upon the carrying structure 3, are positioned such that each of the vehicle identity registration devices 4, registration cameras, captures one each of the roundabout junction areas, where the connecting roads 301, 302, 304 connects with the road 300 of the traffic roundabout 8. The vehicle identity registration cameras 4 are arranged to be essentially parallel with the ground and at a height corresponding to an average height of vehicles for which the traffic roundabout 8 is adapted for; thereby optimized to capture the front or rear of a vehicle entering or exiting the roundabout 8 through a junction. License plates can thereby be registered e.g. by ANPR or fingerprint technology, further can an image of the vehicle driver be captured with the same camera. The advantageous arrangement of the vehicle identity registration cameras 4 at the same height as the vehicles simplifies an automatic reading of licence plates due to the lesser distortion of the image.

Tracking of the vehicles in between the connecting roads 301, 302, 303, 304 along the road 300 of the traffic roundabout 8 is performed by the vehicle tracking cameras 5. A plurality of vehicle tracking cameras 5 are arranged at a height and working angle such that the arc shaped interconnecting zone 7 is defined by the capturing areas 77 of the tracking cameras. The inventive traffic surveillance system 1 is arranged such that the circular interconnecting zone 7 covers the entire road area 300 of the traffic roundabout 8. The traffic surveillance system 1 can thereby track vehicle passing from one gateway zone 6 where it is registered by a vehicle registration camera 4, through the traffic roundabout 8, to a gateway zone 6 from which i leaves the traffic roundabout 8 and is registered by another vehicle registration camera 4. The vehicle tracking cameras 5 are arranged upon the carrying structure 3 such that the images captured of the surveillance zone 2 are taken at an angle, allowing the vehicles in the surveillance zone 2 to be captured from above.

The traffic surveillance system 1 in Figure 3a, b is provided with a lightening means 10. The lightning means 10 is arranged at a different height upon the carrying structure 3 than the vehicle identity registration devices 4 and directed towards the roundabout 8 in order to illuminate the surveillance zone 2.

When installing or maintaining a traffic surveillance system 1 as disclosed in the examples above the traffic passing the surveillance zone 2 does not need to be re-directed as the carrying structure 3. Because vehicles entering the traffic roundabout 8 enter directed towards the traffic surveillance system 1, the vehicle identification cameras can capture a clear image of fronts and rears of vehicles entering and exiting the traffic roundabout 8. When used for collecting toll charges, the arrangement of the traffic surveillance system 1 in a traffic roundabout 8 enables a toll charging of all the roads 301, 302, 304, that enters the traffic roundabout 8 with only one traffic surveillance system 1.

The invention is not limited to the specific embodiments presented, but includes all variations within the scope of the present claims.

For example the carrying structure 3 may comprise one or several individual structures upon which the traffic surveillance devices 4, 5, 6 may be arranged at different heights.

Reference signs mentioned in the claims should not be seen as limiting the extent of the matter protected by the claims, and their sole function is to make claims easier to understand.

As will be realised, the invention is capable of modification in various obvious respects, all without departing from the scope of the appended claims. Accordingly, the drawings and the description thereto are to be regarded as illustrative in nature, and not restrictive.

## Claims

1. Traffic surveillance system (1), wherein said system (1) is adapted to track and register vehicles passing a surveillance zone (2), said traffic surveillance system (1) comprises a carrying structure (3) and a plurality of traffic surveillance devices, wherein said traffic surveillance devices are adapted to be mounted upon said carrying structure (3) and comprises at least a vehicle identity registration device (4) and a vehicle tracking device (5), said surveillance zone being defined as the coverage of said devices and provided in a plane (22) from which the carrying structure (3) protrudes, wherein said surveillance zone (2) comprises a plurality of gateway zones (6) and at least one interconnecting zone (7), which interconnecting zone (7) connects at least two gateway zones (6) with each other, **characterised in that**
said vehicle identity registration device (4) is arranged such upon said carrying structure (3) that it defines said gateway zones (6) **in that** it is adapted to record a passage of a vehicle into or out from said surveillance zone (2) through said gateway zones (6) and said vehicle tracking device (5) is arranged such upon said carrying structure (3) that it defines essentially arc shaped interconnecting zone (7).

2. Traffic surveillance system (1) according to claim 1, wherein said vehicle identity registration device (4) comprises a plurality of vehicle identity registration cameras arranged to capture images of vehicles passing into or out of said surveillance zone (2) through said gateway zones (6), wherein said traffic surveillance system (1) is provided with image processing means adapted to identify vehicles in images captured by said vehicle identity registration camera.

3. Traffic surveillance system (1) according to claim 2, wherein said vehicle identity registration camera is arranged below an average height of vehicles for which said traffic surveillance zone (2) is adapted for.

4. Traffic surveillance system (1) according to any of the claims 2-3, wherein said vehicle identity registration cameras are arranged such that they can capture images of a front or a rear of a vehicle entering or exiting said surveillance zone (2) through said gateway zones (6) with a camera direction essentially parallel with the ground.

5. Traffic surveillance system (1) according to any of the preceding claims 1-4, wherein said vehicle tracking device (5) comprises at least one vehicle tracking camera, wherein said vehicle tracking camera is arranged at a position such that it can capture images of said surveillance zone (2) from above and thereby define said arc shaped interconnecting zone.

6. Traffic surveillance system (1) according to claim 5, wherein a plurality of vehicle tracking cameras is provided.

7. Traffic surveillance system (1) according to any of the preceding claims 6, wherein said plurality of vehicle tracking cameras defines a plurality of interconnecting zones (7), which interconnecting zones (7) together forms a circular area with an inner and outer boundary such that said carrying structure (3) is provided inside said inner boundary.

8. Traffic surveillance system (1) according to any of the preceding claims, wherein said surveillance zone (2) is adapted to cover a traffic roundabout (8) and said gateway zones (6) are adapted to cover entrances to said traffic roundabout (8) and said interconnecting zones (7) are adapted to cover road areas of said entrances (9) and in-between said entrances (9).

9. Traffic surveillance system (1) according to any of the preceding claim 2-8, wherein said traffic surveillance system (1) further is provided with lightning means (10) in order to illuminate said surveillance zone (2), wherein said lightning means (10) are provided distanced to said vehicle identity registration device (4) and vehicle tracking device (5) such, that obstructions falling from the sky, especially rain and/or snow are not illuminated immediately in front of said vehicle identity registration device (4) and vehicle tracking device (5).

10. Traffic surveillance system (1) according to any of the preceding claims, wherein said traffic surveillance system (1) further is provided with a radio transceiver for communication with transponder adapted to be arranged within a vehicle.

## Patentansprüche

1. Verkehrsüberwachungssystem (1), wobei das System (1) dazu ausgebildet ist, Fahrzeuge, die eine Überwachungszone (2) passieren, zu verfolgen und zu erfassen, wobei das Verkehrsüberwachungssystem (1) eine Trägerstruktur (3) und eine Mehrzahl von Verkehrsüberwachungsanordnungen umfasst, wobei die Verkehrsüberwachungsanordnungen dazu ausgebildet sind, an der Trägerstruktur (3) montiert zu werden, und zumindest eine Fahrzeugidentitätserfassungsanordnung (4) und eine Fahrzeugverfolgungsanordnung (5) umfassen, wobei die Überwachungszone als die Abdeckung der Anordnungen definiert wird und in einer Ebene (22) vorgesehen ist, von welcher die Trägerstruktur (3) vorsteht, wobei die Überwachungszone (2) eine Mehrzahl von Gatewayzonen (6) und zumindest eine Verbindungszone (7) umfasst, welche Verbindungszone (7) zumindest zwei Gatewayzonen (6) miteinander verbindet, **dadurch gekennzeichnet, dass** die Fahrzeugidentitätserfassungsanordnung (4) an der Trägerstruktur (3) derart angeordnet ist, dass sie die Gatewayzonen (6) definiert, dass dazu ausgebildet ist, das Passieren eines Fahrzeuges in die Überwachungszone (2) oder aus der Überwachungszone (2) durch die Gatewayzonen (6) aufzuzeichnen, und die Fahrzeugverfolgungsanordnung (5) an der Trägerstruktur (3) derart angeordnet ist, dass sie eine im Wesentlichen bogenförmige Verbindungszone (7) definiert.

2. Verkehrsüberwachungssystem (1) nach Anspruch 1, wobei die Fahrzeugidentitätserfassungsanordnung (4) eine Mehrzahl von Fahrzeugidentitätserfassungskameras umfasst, die zur Aufnahme von Bildern von Fahrzeugen, die in die Überwachungszone (2) oder aus der Überwachungszone (2) durch die Gatewayzonen (6) passieren, ausgebildet sind, wobei das Verkehrsüberwachungssystem (1) mit Bildverarbeitungsmitteln versehen ist, die zum Identifizieren von Fahrzeugen auf durch die Fahrzeugidentitätserfassungskamera aufgenommenen Bildern ausgebildet sind.

3. Verkehrsüberwachungssystem (1) nach Anspruch 2, wobei die Fahrzeugidentitätserfassungskamera unter einer durchschnittlichen Höhe von Fahrzeugen, für welche die Verkehrsüberwachungszone (2) ausgebildet ist, angeordnet ist.

4. Verkehrsüberwachungssystem (1) nach einem der Ansprüche 2-3, wobei die Fahrzeugidentitätserfassungskameras derart angeordnet sind, dass sie Bilder von einer Front oder einem Heck eines Fahrzeugs aufnehmen können, welches in die Überwachungszone (2) oder aus der Überwachungszone (2) durch die Gatewayzonen (6) fährt, mit einer mit dem Boden im Wesentlichen parallelen Kamerarichtung.

5. Verkehrsüberwachungssystem (1) nach einem der vorgehenden Ansprüche 1-4, wobei die Fahrzeugverfolgungsanordnung (5) zumindest eine Fahrzeugverfolgungskamera umfasst, wobei die Fahrzeugverfolgungskamera in einer derartigen Position angeordnet ist, dass sie Bilder der Überwachungszone (2) von oben aufnehmen kann und somit die bogenförmige Verbindungszone definieren kann.

6. Verkehrsüberwachungssystem (1) nach Anspruch 5, wobei eine Mehrzahl von Fahrzeugverfolgungskameras vorgesehen sind.

7. Verkehrsüberwachungssystem (1) nach einem der vorgehenden Ansprüche 6, wobei die Mehrzahl von Fahrzeugverfolgungskameras eine Mehrzahl von Verbindungszonen (7) definieren, welche Verbindungszonen (7) zusammen einen kreisförmigen Bereich mit einer inneren und äußeren Grenze derart bilden, das die Trägerstruktur (3) innerhalb der inneren Grenze vorgesehen ist.

8. Verkehrsüberwachungssystem (1) nach einem der vorgehenden Ansprüche, wobei die Überwachungszone (2) dazu ausgebildet ist, einen Kreisverkehr (8) abzudecken, und die Gatewayzonen (6) dazu ausgebildet sind, Eintritte zum Kreisverkehr (8) abzudecken, und die Verbindungszonen (7) dazu ausgebildet sind, Wegbereiche der Eintritte (9) und Zwischenbereiche der Eintritte (9) abzudecken.

9. Verkehrsüberwachungssystem (1) nach einem der vorgehenden Ansprüche 2-8, wobei das Verkehrsüberwachungssystem (1) ferner mit Beleuchtungsmitteln (10) versehen ist, um die Überwachungszone (2) zu beleuchten, wobei die Beleuchtungsmittel (10) zur Fahrzeugidentitäterfassungsanordnung (4) und zur Fahrzeugverfolgungsanordnung (5) derart beabstandet angeordnet sind, dass vom Himmel fallende Hindernisse, insbesondere Regen und/oder Schnee, nicht unmittelbar vor der Fahrzeugidentitätserfassungsanordnung (4) und der Fahrzeugverfolgungsanordnung (5) beleuchtet werden.

10. Verkehrsüberwachungssystem (1) nach einem der vorgehenden Ansprüche, wobei das Verkehrsüberwachungssystem (1) ferner mit einem Funkgerät versehen ist, welches für die Kommunikation mit einem Transponder vorgesehen ist, welcher dazu ausgebildet ist, im Inneren eines Fahrzeuges angeordnet zu werden.

## Revendications

1. Système de surveillance de la circulation (1), dans lequel ledit système (1) est conçu pour localiser et enregistrer des véhicules qui passent une zone de surveillance (2), ledit système de surveillance de la circulation (1) comprenant une structure porteuse (3) et une pluralité de dispositifs de surveillance de la circulation, dans lequel lesdits dispositifs de surveillance de la circulation sont adaptés pour être montés sur ladite structure porteuse (3) et comprennent au moins un dispositif d'enregistrement de l'identité du véhicule (4) et un dispositif de localisation du véhicule (5), ladite zone de surveillance étant définie comme la couverture desdits dispositifs et pourvue dans un plan (22) à partir duquel la structure porteuse (3) fait saillie, dans lequel ladite zone de surveillance (2) comprend une pluralité de zones de passerelle (6) et au moins une zone d'interconnexion (7), ladite zone d'interconnexion (7) reliant au moins deux zones de passerelle (6) l'une à l'autre,
**caractérisé en ce que**
ledit dispositif d'enregistrement de l'identité du véhicule (4) est agencé d'une telle manière sur ladite structure porteuse (3) qu'il définit lesdites zones de passerelle (6), **en ce qu'**il est conçu pour enregistrer un passage d'un véhicule dans ou en dehors de ladite zone de surveillance (2) à travers lesdites zones de passerelle (6) et ledit dispositif de localisation du véhicule (5) est agencé d'une telle manière sur ladite structure porteuse (3) qu'il définit la zone d'interconnexion essentiellement en forme d'arc (7).

2. Système de surveillance de la circulation (1) selon la revendication 1, dans lequel ledit dispositif d'enregistrement de l'identité du véhicule (4) comprend une pluralité de caméras d'enregistrement de l'identité du véhicule agencées pour capturer des images de véhicules passant dans ou en dehors de ladite zone de surveillance (2) à travers lesdites zones de passerelle (6), dans lequel ledit système de surveillance de la circulation (1) est pourvu d'un moyen de traitement d'image adapté de manière à identifier des véhicules dans les images capturées par ladite caméra d'enregistrement de l'identité du véhicule.

3. Système de surveillance de la circulation (1) selon la revendication 2, dans lequel ladite caméra d'enregistrement de l'identité du véhicule est disposée en dessous d'une hauteur moyenne des véhicules pour laquelle ladite zone de surveillance de la circulation (2) est adaptée.

4. Système de surveillance de la circulation (1) selon l'une quelconque des revendications 2 à 3, dans lequel lesdites caméras d'enregistrement de l'identité du véhicule sont disposées d'une telle façon qu'elles peuvent capturer des images d'un front ou d'une partie arrière d'un véhicule entrant ou sortant de ladite zone de surveillance (2) à travers lesdites zones de passerelle (6) avec une orientation de la caméra essentiellement parallèle au sol.

5. Système de surveillance de la circulation (1) selon l'une quelconque des revendications 1 à 4, dans lequel ledit dispositif de localisation du véhicule (5) comprend au moins une caméra de localisation du véhicule, ladite caméra de localisation du véhicule étant arrangée à une position telle qu'elle peut capturer des images de ladite zone de surveillance (2) à partir du haut et ainsi définir ladite zone d'interconnexion en forme d'arc.

6. Système de surveillance de la circulation (1) selon la revendication 5, dans lequel une pluralité de caméras de localisation du véhicule est fournie.

7. Système de surveillance de la circulation (1) selon l'une quelconque des revendications précédentes 6, dans lequel ladite pluralité de caméras de localisation du véhicule définit une pluralité de zones d'interconnexion (7), lesdites zones d'interconnexion (7) formant, les unes avec les autres, une zone circulaire avec une limite intérieure et extérieure si bien que ladite structure porteuse (3) est pourvue à l'intérieur de ladite limite intérieure.

8. Système de surveillance de la circulation (1) selon l'une quelconque des revendications précédentes, dans lequel ladite zone de surveillance (2) est adaptée de manière à recouvrir un rond-point de circulation (8), et lesdites zones de passerelle (6) sont adaptées de manière à recouvrir des entrées audit rond-point de circulation (8), et lesdites zones d'interconnexion (7) sont adaptées de manière à recouvrir les zones de la route desdites entrées (9) et entre lesdites entrées (9).

9. Système de surveillance de la circulation (1) selon l'une quelconque des revendications précédentes 2 à 8, dans lequel ledit système de surveillance de la circulation (1) en outre est pourvu de moyens d'illumination (10) afin d'illuminer ladite zone de surveillance (2), dans lequel lesdits moyens d'illumination (10) sont arrangés à distance dudit dispositif d'enregistrement de l'identité du véhicule (4) et du dispositif de localisation du véhicule (5) d'une telle manière que les obstacles qui tombent du ciel, en particulier la pluie et/ou la neige, ne sont pas éclairés immédiatement devant ledit dispositif d'enregistrement de l'identité du véhicule (4) et ledit dispositif de localisation du véhicule (5).

10. Système de surveillance de la circulation (1) selon l'une quelconque des revendications précédentes, dans lequel ledit système de surveillance de la circulation (1) en outre est pourvu d'un émetteur-récepteur radio pour la communication avec un transpondeur adapté pour être disposé à l'intérieur d'un véhicule.
